# EUROPEAN PATENT APPLICATION

(11) **EP 4 541 847 A1**
(43) Date of publication of application: **23.04.2025**
(21) Application number: 23835655.4
(22) Date of filing: 14.04.2023
(51) Int. Cl.: C08K 11/00, C08L 97/02, C08L 101/00, B29B 11/10

(54) **PLASTIC COMPOSITE MATERIAL COMPRISING COFFEE GROUNDS AND METHOD FOR PREPARING SAME, AND PRODUCT USING SAME AND CHARACTERISTICS OF PRODUCT**

(30) Priority: 05.07.2022 KR 20220082315; 29.08.2022 KR 20220108636
(71) Applicant: Samsung Electronics Co., Ltd., Suwon-si, Gyeonggi-do 16677 (KR); Il Kwang Polymer. Co.,Ltd, Hwaseong-si, Gyeonggi-do 18469 (KR)
(72) Inventor: PARK, Jinhyeong, Suwon-si, Gyeonggi-do 16677 (KR); LEE, Eunkyung, Hwaseong-si, Gyeonggi-do 18469 (KR); LEE, Hankyum, Suwon-si, Gyeonggi-do 16677 (KR); KIM, Doorae, Suwon-si, Gyeonggi-do 16677 (KR); KIM, Minhyouk, Suwon-si, Gyeonggi-do 16677 (KR); KIM, Youngnam, Suwon-si, Gyeonggi-do 16677 (KR); KIM, Youngoh, Suwon-si, Gyeonggi-do 16677 (KR); KIM, Jonghwa, Suwon-si, Gyeonggi-do 16677 (KR); PARK, Seongho, Hwaseong-si, Gyeonggi-do 18469 (KR); PARK, Jeongseok, Suwon-si, Gyeonggi-do 16677 (KR); SONG, Yeongjune, Hwaseong-si, Gyeonggi-do 18469 (KR); OH, Sanhui, Suwon-si, Gyeonggi-do 16677 (KR); OK, Jaemin, Hwaseong-si, Gyeonggi-do 18469 (KR); LEE, Houk, Hwaseong-si, Gyeonggi-do 18469 (KR); CHO, Byonghee, Hwaseong-si, Gyeonggi-do 18469 (KR)
(74) Representative: HGF
(86) International application number: PCT/KR2023/005114
(87) International publication number: WO 2024/010186

(57) **Abstract**

In a plastic composite material comprising coffee grounds and a method for preparing same according to an embodiment of the present disclosure, the particle size distribution of the coffee grounds may have 94 % by weight or more in the proportion of coffee ground particles having a particle size greater than 250 µm and less than or equal to 850 µm and the colorimeter value of the plastic composite material may be 4.4 or less. Various other embodiments may be possible.

## Description

### [Technical Field]

Various embodiments disclosed in this document relate to plastic composite materials, and more specifically, to plastic composite materials including coffee grounds, methods for manufacturing same, products using same, and characteristics of the product.

### [Background Art]

With the development of the economy and industry, various materials or molded products made of plastic are being used. Although various molded products made of plastic exhibit superior durability due to their resistance to oxidation and decomposition, they do not decompose naturally, thus contributing to environmental pollution.

As a result, eco-friendly plastic technology is emerging, and there is active research on plastics utilizing biomass such as plant by-products or plant-based organic materials.

### [Detailed Description of the Invention]

### [Technical Solution]

According to an embodiment of the present disclosure, a plastic composite material including coffee grounds, wherein the coffee grounds have a particle size distribution of 94 weight % or greater for coffee ground particles with a particle size greater than 250 µm and less than or equal to 850 µm and the plastic composite material has a colorimetric value of 4.4 or less.

According to an embodiment of the present disclosure, a method for manufacturing a plastic composite material including coffee grounds includes the processes of: preparing coffee grounds and biomass; drying the coffee grounds and the biomass; freeze-grinding the dried coffee grounds, wherein the coffee grounds formed by grinding the dried coffee grounds have a particle size distribution in which coffee grounds particles with a particle size greater than 250 µm and less than or equal to 850 µm are present in an amount of 94% by weight or more; primarily extruding a mixture of a polymer resin, the ground coffee grounds, the dried biomass, and a first additive; secondarily extruding a mixture of the primary extrudate extruded in the primary extrusion process, and a second additive; and drying the secondary extrudate extruded in the secondary extrusion process.

### [Brief Description of Drawings]

FIG. 1 is a flowchart illustrating a method for manufacturing a plastic composite material including coffee grounds according to an embodiment of the present disclosure.
FIGS. 2A and 2B are diagrams of a cylindrical drying device according to an embodiment of the present disclosure.
FIG. 3 is a graph illustrating the particle size distribution of coffee grounds before and after freeze-grinding according to an embodiment of the present disclosure.
FIG. 4A is a diagram illustrating a plastic composite material according to a comparative example of the present disclosure.
FIG. 4B is a view illustrating a plastic composite material according to an embodiment of the present disclosure.
FIG. 5 is a graph showing the impact strength of a plastic composite material according to a comparative example or an embodiment of the present disclosure.
FIG. 6A is a view illustrating a plastic composite material according to a comparative example of the present disclosure.
FIG. 6B is a view illustrating a plastic composite material according to an embodiment of the present disclosure.
FIG. 6C is a view illustrating a plastic composite material according to a comparative example of the present disclosure.
FIG. 6D is a view illustrating a plastic composite material according to an embodiment of the present disclosure.
FIG. 7A is an image illustrating a plastic composite material according to a comparative example of the present disclosure.
FIG. 7B is an image illustrating a plastic composite material according to an embodiment of the present disclosure.
FIGS. 8A and 8B are images illustrating plastic composite materials according to comparative examples of the present disclosure.
FIG. 8C is an image illustrating a plastic composite material according to an embodiment of the present disclosure.
FIGS. 9A and 9B are diagrams illustrating a cover member composed of a plastic composite material according to an embodiment of the present disclosure.
FIG. 10 is a diagram illustrating a cover member composed of a plastic composite material according to an embodiment of the present disclosure.

### [Mode for Carrying out the Invention]

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B", "at least one of A and B", "at least one of A or B", "A, B, or C", "at least one of A, B, and C", and "at least one of A, B, or C" may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order).

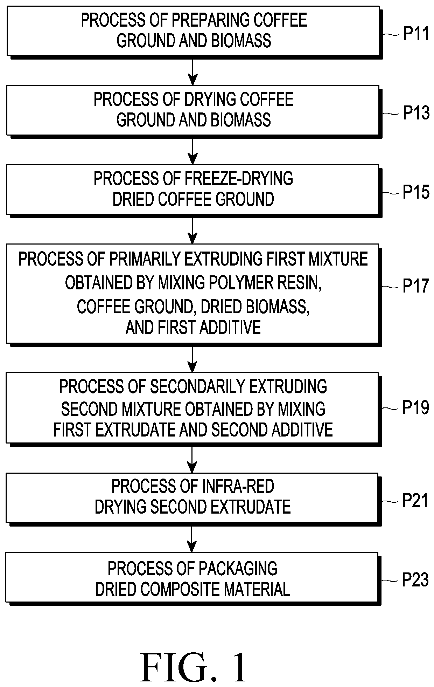

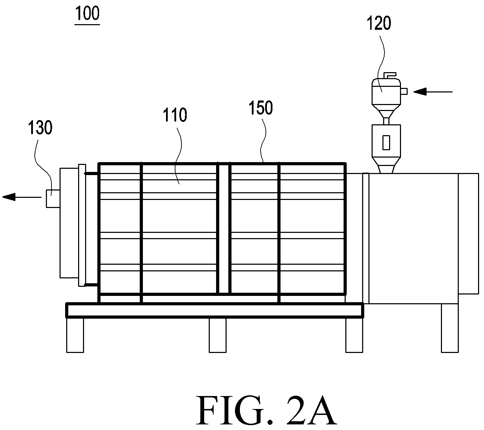

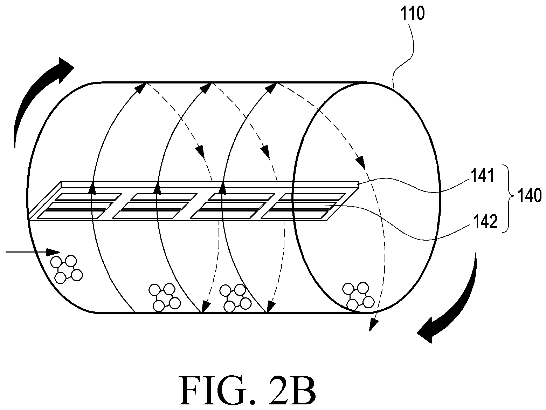

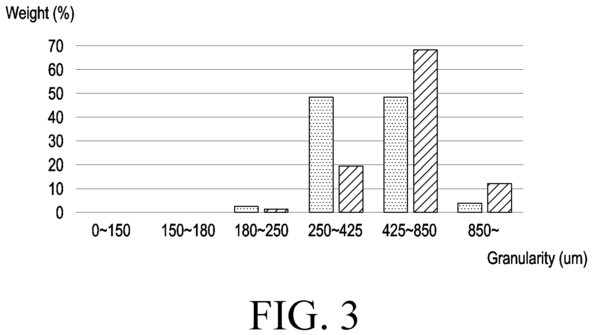

FIG. 1 is a flowchart illustrating a method for manufacturing a plastic composite material including coffee grounds according to an embodiment of the present disclosure. FIGS. 2A and 2B are diagrams of a cylindrical drying device according to an embodiment of the present disclosure. FIG. 3 is a graph illustrating the particle size distribution of coffee grounds before and after freeze grinding according to an embodiment of the present disclosure.

Referring to FIG. 1, a method for manufacturing a plastic composite material including coffee grounds may include the processes of: preparing coffee grounds and biomass (P11); drying the coffee grounds and biomass (P13); freeze-grinding the dried coffee grounds (P15); primarily extruding a first mixture obtained by mixing a polymer resin, ground coffee grounds, dried biomass, and a first additive (P17); secondarily extruding a second mixture obtained by mixing the primary extrudate with a second additive (P19); drying the secondary extrudate using infrared radiation (P21); and/or packaging the dried composite material (P23).

According to an embodiment, the method for manufacturing a plastic composite material including coffee grounds may include a process (P11) of preparing coffee grounds and biomass. In an embodiment, coffee grounds may be a by-product or residue left after extracting coffee liquid from coffee beans. In an embodiment, biomass may be a plant by-product or plant waste. In an embodiment, biomass may include at least one of wood meal, rice straw, rice husk, rice bran, soybean hull, or wheat bran. In an embodiment, biomass may include various plant by-products or plant wastes without being limited to the aforementioned compositions.

According to an embodiment, the method for manufacturing a plastic composite material including coffee grounds may include a process (P13) of drying the coffee grounds and biomass. In an embodiment, the process (P13) of drying the coffee grounds and biomass may be performed separately. In an embodiment, the process (P13) of drying the coffee grounds and biomass may include an infrared irradiation process or an ultraviolet irradiation process.

In an embodiment, the infrared or ultraviolet irradiation process may be carried out through a cylindrical drying device (e.g., cylindrical drying device (100) in FIGS. 2a and 2b).

Referring to FIGS. 2A and 2B, the cylindrical drying device (100) may include a rotating housing (110), an inlet (120), an outlet (130), an infrared drying section (140), and/or an ultraviolet irradiation section.

In an embodiment, the rotating housing (110) may be a cylindrical housing with an internal space formed therein, and may be mounted on a support structure (150) so that the central axis of the circular cross-section of the rotating housing (110) is substantially parallel to the ground or floor surface. In an embodiment, the rotating housing (110) may be rotatably mounted with respect to the support structure (150). In an embodiment, as the rotating housing (110) rotates about the central axis, the rotating housing (1100 may stir the coffee grounds or biomass introduced into the interior thereof.

In an embodiment, the inlet (120) may be configured to connect to the rotating housing (110) directly or indirectly via a separate member, allowing coffee grounds or biomass to be introduced into the rotating housing (110).

In an embodiment, the outlet (130) may be configured to connect to the rotating housing (110) directly or indirectly via a separate member, allowing coffee grounds or biomass to be discharged from the rotating housing (110).

In an embodiment, the infrared drying section (140) may be positioned inside the rotating housing (110). In an embodiment, the infrared drying section (140) may include a panel (141) and at least one infrared lamp (142) positioned on the panel (141). In an embodiment, the panel (141) may remain stationary when the rotating housing (110) rotates. In an embodiment, the panel (141) may remain fixed in position relative to the rotating housing (110), rotating together with the rotating housing (110). In an embodiment, the at least one infrared lamp (142) in the infrared drying section (140) may irradiate the coffee grounds or biomass being stirred inside the rotating housing (110) with infrared rays. In an embodiment, the infrared irradiation process may dry the coffee grounds or biomass being stirred inside the rotating housing (110). The infrared drying process is not limited to being performed by at least one infrared lamp (142) and may be carried out using various means capable of irradiating infrared rays.

In an embodiment, the ultraviolet irradiation section (not shown) may irradiate ultraviolet rays onto the coffee grounds or biomass passing through the cylindrical drying device (100). In an embodiment, the ultraviolet irradiation section may include at least one ultraviolet lamp (not shown). The at least one ultraviolet lamp may irradiate ultraviolet rays of various wavelength bands onto the coffee grounds or biomass. In an embodiment, the at least one ultraviolet lamp may include a first ultraviolet lamp, a second ultraviolet lamp, and/or a third ultraviolet lamp.

In an embodiment, the first ultraviolet lamp may be configured to irradiate ultraviolet rays in a first wavelength band. In an embodiment, the first wavelength band may be about 320 nm to about 400 nm, but is not limited thereto. In an embodiment, the first ultraviolet lamp may be a UV-A lamp irradiating ultraviolet rays in the first wavelength band, but is not limited thereto.

In an embodiment, the second ultraviolet lamp may be configured to irradiate ultraviolet rays in a second wavelength band different from the first wavelength band. In an embodiment, the second wavelength band may be about 290 nm to about 320 nm, but is not limited thereto. In an embodiment, the second ultraviolet lamp may be a UV-B lamp irradiating ultraviolet rays in the second wavelength band, but is not limited thereto.

In an embodiment, the third ultraviolet lamp may be configured to irradiate ultraviolet rays in a third wavelength band different from the first and second wavelength bands. In an embodiment, the third wavelength band may be about 200 nm to about 290 nm, but is not limited thereto. In an embodiment, the third ultraviolet lamp may be a UV-C lamp irradiating ultraviolet rays in the third wavelength band, but is not limited thereto.

In an embodiment, the first, second, and third ultraviolet lamps may be installed in the inlet (120) and outlet (130) to irradiate ultraviolet rays onto the coffee grounds or biomass passing through the inlet (120) and outlet (130). In an embodiment, the first, second, and third ultraviolet lamps may be installed inside the cylindrical housing (110) to irradiate ultraviolet rays onto the coffee grounds or biomass being stirred inside the cylindrical housing (110).

In an embodiment, the step of drying the coffee grounds may include both the infrared irradiation process and the ultraviolet irradiation process. In an embodiment, the infrared and ultraviolet irradiation processes for the coffee grounds may be performed simultaneously or at different times. In an embodiment, the coffee grounds may be stirred by the rotating housing (110) inside the rotating housing (110) and may be dried by infrared irradiation from the infrared lamp (142). In an embodiment, the infrared irradiation process may be performed until the moisture content of the coffee grounds is reduced to about 0.4% or less.

According to an embodiment, the infrared irradiation process for coffee grounds may be defined and interpreted as a process for drying coffee grounds through infrared radiant heat. In an embodiment, the infrared irradiation process for coffee grounds may be carried out within a temperature range of about 90°C to about 95°C inside the rotating housing (110) for a duration of about 30 minutes.

In an embodiment, the coffee grounds may be irradiated with ultraviolet light by the first ultraviolet lamp, second ultraviolet lamp, and third ultraviolet lamp, resulting in discoloration (or bleaching). In an embodiment, the ultraviolet irradiation process for coffee grounds may be performed for about 10 minutes.

According to an embodiment, the process of drying biomass may include an infrared irradiation process and an ultraviolet irradiation process. In an embodiment, the infrared and ultraviolet irradiation processes for biomass may be performed substantially simultaneously or at different times. In an embodiment, the biomass may be stirred by the rotating housing (110) inside the rotating housing (110) and may be dried by infrared irradiation from the infrared lamp (142). In an embodiment, the infrared irradiation process for biomass may be performed until the moisture content of the biomass is reduced to about 0.4% or less. In an embodiment, the biomass may be irradiated with ultraviolet light by the first ultraviolet lamp, second ultraviolet lamp, and third ultraviolet lamp, resulting in discoloration (or bleaching). In an embodiment, the ultraviolet irradiation process for biomass may be performed for about 10 minutes.

According to an embodiment, the infrared irradiation process for biomass may be defined and interpreted as a process for drying biomass through infrared radiant heat. In an embodiment, the infrared irradiation process for biomass may be carried out within a temperature range of about 60°C to about 65°C inside the rotating housing (110) for a duration of about 30 minutes.

In an embodiment, the coffee grounds may be irradiated with ultraviolet light by the first ultraviolet lamp, second ultraviolet lamp, and third ultraviolet lamp, resulting in discoloration (or bleaching). In an embodiment, the ultraviolet irradiation process for coffee grounds may be performed for about 10 minutes.

According to an embodiment, the drying process (P13) for coffee grounds and the drying process (P13) for biomass may be carried out separately due to differences in the material and moisture content of the coffee grounds and biomass.

According to an embodiment, a plastic composite material manufactured using the coffee grounds and biomass subjected to the ultraviolet irradiation process may exhibit a relatively lower degree of discoloration upon ultraviolet exposure compared to a plastic composite material manufactured using coffee grounds and biomass that were not subjected to the ultraviolet irradiation process. A more detailed explanation will be provided later.

Referring to FIG. 1, the method of manufacturing a plastic composite material including coffee grounds may include a process (P15) of freeze-grinding the dried coffee grounds. In an embodiment, the process of freeze-grinding dried coffee grounds may include a freezing process or a grinding process.

According to an embodiment, the freezing process for coffee grounds may be carried out by freezing dried coffee grounds using nitrogen gas. In an embodiment, the freezing process for coffee grounds may be defined and interpreted as a process of freezing dried coffee grounds within a temperature range of about -195°C using nitrogen gas.

According to an embodiment, the grinding process for coffee grounds may be carried out by grinding the frozen coffee grounds. When coffee grounds are ground after the freezing process is performed, they may be more smoothly ground compared to when coffee grounds are ground without the freezing process.

According to an embodiment, the coffee grounds subjected to the freeze-grinding process (P15) may have a particle size distribution in which the proportion of coffee grounds particles with a particle size of about 250 µm to about 850 µm (micrometers) is about 94% by weight or more.

FIG. 3 is a graph showing the particle size distribution of coffee grounds before and after freeze-grinding according to an embodiment of the present disclosure.

Table 1 below summarizes the particle size distribution of coffee grounds before and after freeze-grinding according to an embodiment of the present disclosure

**TABLE 1**

| Particle Size Range (µm) | Before Freeze-Grinding (% by weight) | After Freeze-Grinding (% by weight) |
|---|---|---|
| ≤150 | 0.0 | 0.0 |
| 150 < x < 180 | 0.2 | 0.1 |
| 180 < x ≤ 250 | 0.8 | 1.7 |
| 250 < x ≤ 425 | 19.7 | 48.6 |
| 425 < x ≤ 850 | 67.9 | 46.2 |
| >850 | 11.4 | 3.4 |

Referring to FIG. 3 and Table 1, before freeze-grinding, the coffee grounds may have a particle size distribution where the proportion of particles is about 0.0 % by weight for particles with a size less than or equal to about 150 µm, about 0.2 % by weight for particles with a size greater than about 150 µm and less than or equal to about 180 µm, about 0.8 % by weight for particles with a size greater than about 180 µm and less than or equal to about 250 µm, about 19.7 % by weight for particles with a size greater than about 250 µm and less than or equal to about 425 µm, about 67.9 % by weight for particles with a size greater than about 425 µm and less than or equal to about 850 µm, and about 11.4 % by weight for particles with a greater than about 850 µm. With reference to FIG. 3 and Table 1, after freeze-grinding, the coffee grounds may have a particle size distribution where the proportion of particles is about 0.0 % by weight for particles with a size greater than about 150 µm, about 0.1 % by weight for particles with a size greater than about 150 µm and less than or equal to about 180 µm, about 1.7 % by weight for particles with a size greater than about 180 µm and less than or equal to about 250 µm, about 48.6 % by weight for particles with a size greater than about 250 µm and less than or equal to about 425 µm, about 46.2 % by weight for particles with a size greater than about 425 µm and less than or equal to about 850 µm, and about 3.4 % by weight for particles with a size greater than 850 µm.

According to an embodiment, the coffee grounds subjected to the freeze-grinding process (P15) may have a particle size distribution where the proportion of coffee grounds particles with a particle size greater than about 250 µm and less than or equal to about 850 µm is about 95% by weight.

According to an embodiment, the weight ratio of the first particle size range (e.g., greater than about 250 µm and less than or equal to about 850 µm) in the coffee grounds subjected to the freeze-grinding process (P15) may be greater than the weight ratio of other particle size ranges.

According to an embodiment, the plastic composite material including the coffee grounds subjected to the freeze-grinding process (P15) may exhibit a uniform distribution of coffee grounds in the appearance of molded articles made of the plastic composite material due to the higher weight ratio of the first particle size range compared to other particle size ranges.

Referring to FIG. 1, the method for manufacturing a plastic composite material including coffee grounds may include a process (P17) of primarily extruding a first mixture obtained by mixing a polymer resin, the coffee grounds, dried biomass, and a first additive.

According to an embodiment, the method for manufacturing a plastic composite material including coffee grounds may include a process (P19) of secondarily extruding a second mixture obtained by mixing the primary extrudate with a second additive

According to an embodiment, the primary extrusion process (P17) and/or the secondary extrusion process (P19) may be performed using an extruder, which may be a twin extruder. In an embodiment, the primary extrusion process (P17) may be performed by extruding the first mixture, obtained by mixing a polymer resin, the ground coffee grounds, dried biomass, and a first additive, to form a first extrudate (or primary extrudate). In an embodiment, the secondary extrusion process (P19) may be performed by extruding the second mixture, obtained by mixing the first extrudate with a second additive, to form a second extrudate (or secondary extrudate).

Table 2 below shows the weight ratios of additives added in the primary extrusion process (P17) and the secondary extrusion process (P19) according to an embodiment of the present disclosure.

**TABLE 2**

| Process | Material | Wt. part |
|---|---|---|
| Primary Extrusion (P17) | Polymer Resin | 100 |
| | Coffee Grounds | 3 - 30 |
| | Biomass | 3 - 10 |
| | Antioxidant | 0.1 - 2 |
| | Compatibilizer | 3 - 5 |
| | Impact Modifier | 8 - 35 |
| Secondary Extrusion (P19) | UV Stabilizer | 0.1 - 18 |
| | Pigment | 0.1 - 2 |

According to an embodiment, the primary extrusion process (P17) may be performed by primarily extruding a first mixture, which is obtained by mixing the ground coffee grounds, dried biomass, and a first additive with a polymer (resin), to form a first extrudate. In an embodiment, the first additive may include at least one of an antioxidant, a compatibilizer, or an impact modifier. In an embodiment, the primary extrusion process (P17) may involve feeding the first mixture, which includes a polymer resin (or polymer), ground coffee grounds, dried biomass, and a first additive, into an extruder through a main feeder and a sub-feeder and extruding the fed materials to form a first extrudate. In an embodiment, the weight ratio of materials fed through the main feeder and the sub-feeder may be about 80:20. In an embodiment, the primary extrusion process (P17) may be performed at a temperature range of about 170°C to about 180°C using an extruder screw with a diameter (Ø) of about 32 or more in a twin-screw extruder.

According to an embodiment, the weight ratio of materials fed in the primary extrusion process (P17) may be about 3 to about 30 parts by weight of ground coffee grounds, about 3 to about 10 parts by weight of dried biomass, and about 3.4 to about 37 parts by weight of the first additive, based on about 100 parts by weight of the polymer resin (or polymer).

In an embodiment, the polymer resin may include at least one selected from the group consisting of polypropylene-based polymer resins, polyethylene-based polymer resins, polystyrene-based polymer resins, acrylonitrile-butadiene-styrene (ABS) copolymer-based polymer resins, polyoxymethylene-based polymer resins, polyketone-based polymer resins, thermoplastic elastomer-based resins, and biodegradable polymer resins.

According to an embodiment, the first additive may include at least one of an antioxidant, a compatibilizer, or an impact modifier.

In an embodiment, the antioxidant may include at least one selected from the group consisting of a phenol-based primary antioxidant or a phosphorous-based secondary antioxidant. In an embodiment, the weight ratio of the antioxidant added in the primary extrusion process (P17) may be about 0.1 to about 2 parts by weight, based on about 100 parts by weight of the polymer resin (or polymer).

According to an embodiment, the compatibilizer may include at least one selected from the group consisting of a polypropylene compatibilizer or a polyolefin-based compatibilizer used with polyethylene. In an embodiment, the weight ratio of the compatibilizer added in the primary extrusion process (P17) may be about 3 to about 5 parts by weight, based on 100 parts by weight of the polymer resin (or polymer).

In an embodiment, the impact modifier may include at least one selected from the group consisting of an olefin-based impact modifier, a silicon-based impact modifier, an ABS-based (acrylonitrile, butadiene, styrene) impact modifier, or a polyester-based elastomer impact modifier. In an embodiment, the weight ratio of the impact modifier added in the primary extrusion process (P17) may be about 8 to about 35 parts by weight, based on about 100 parts by weight of the polymer resin (or polymer).

According to an embodiment, the secondary extrusion process (P19) may be performed by secondarily extruding a second mixture, which is obtained by mixing the first extrudate with a second additive, to form a second extrudate.

In an embodiment, the secondary extrusion process (P19) may involve feeding the second mixture, which includes the first extrudate and the second additive, into an extruder through the main feeder and extruding the fed materials to form a second extrudate.

According to an embodiment, the weight ratio of the second additive added in the secondary extrusion process (P19) may be about 0.2 to about 20 parts by weight, based on about 100 parts by weight of the polymer resin added in the primary extrusion process (P17).

In an embodiment, the second additive may include at least one of a UV stabilizer or a pigment.

According to an embodiment, the UV stabilizer may include at least one selected from the group consisting of an absorber-type UV stabilizer, a HALS (hindered amine light stabilizer) UV stabilizer, peroxide decomposer UV stabilizer, a radical inhibitor UV stabilizer, or a quencher UV stabilizer. In an embodiment, the weight ratio of the UV stabilizer added in the secondary extrusion process (P19) may be about 0.1 to about 18 parts by weight, based on about 100 parts by weight of the polymer resin (or polymer) added in the primary extrusion process (P17).

In an embodiment, the pigment may include at least one selected from the group consisting of an organic pigment or an inorganic pigment. In an embodiment, the weight ratio of the pigment added in the secondary extrusion process (P19) may be about 0.1 to about 2 parts by weight, based on about 100 parts by weight of the polymer resin (or polymer) added in the primary extrusion process (P17).

According to an embodiment, the secondary extrusion process (P19) may be performed at a temperature range of about 110°C to about 160°C using an extruder screw with a diameter (Ø) of about 32 or more in a twin-screw extruder.

According to an embodiment, the method for manufacturing a plastic composite material including coffee grounds may include a process (P21) of infrared drying the second extrudate. In an embodiment, the process (P21) of infrared drying the second extrudate may be performed within a temperature range of about 85°C to about 90°C for a duration of about 30 minutes inside the rotating housing (110). In an embodiment, through the infrared drying process, a dried plastic composite material may be formed from the second extrudate.

According to an embodiment, the method for manufacturing a plastic composite material including coffee grounds may include a process (P23) of packaging the dried composite material.

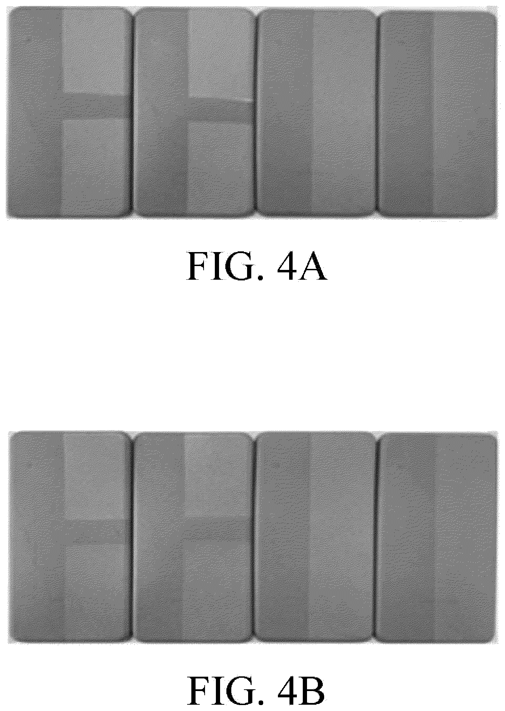

FIG. 4A is a view illustrating a plastic composite material according to a comparative example of the present disclosure. FIG. 4B is a view illustrating a plastic composite material according to an embodiment of the present disclosure.

The embodiments shown in FIGS. 4A and 4B may be combined with the embodiments shown in FIGS. 1 to 3.

The comparative example in FIG. 4A represents a plastic composite material manufactured by adding a UV stabilizer without performing UV irradiation on the dried coffee grounds in the method for manufacturing a plastic composite material including coffee grounds as shown in FIG. 1, while the embodiment in FIG. 4B represents a plastic composite material manufactured by performing UV irradiation on the dried coffee grounds and adding a UV stabilizer in the method for manufacturing a plastic composite material including coffee grounds as shown in FIG. 1.

Referring to FIG. 4B, it can be confirmed that the discoloration rate of the plastic composite material is lower compared to FIG. 4A.

The colorimetric value, that is, degree of discoloration (△E), of a plastic composite material that has not undergone the UV irradiation process may be about 5.35 for UV-A and about 3.95 for UV-B.

The colorimetric value, that is, degree of discoloration (△E), of a plastic composite material that has undergone the UV irradiation process may be about 4.4 for UV-A and about 3.0 for UV-B.

According to an embodiment, the plastic composite material that has undergone the UV irradiation process may exhibit a lower degree of discoloration upon prolonged UV exposure compared to a plastic composite material that has not undergone the UV irradiation process.

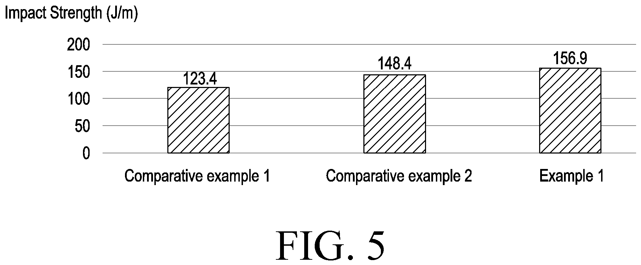

FIG. 5 is a graph showing the impact strength of a plastic composite material according to a comparative example or an embodiment of the present disclosure.

The embodiment shown in FIG. 5 may be combined with the embodiments shown in FIGS. 1 to 4b.

Table 3 below summarizes the physical property values of plastic composite materials according to a comparative example or an embodiment of the present disclosure.

**TABLE 3**

| | C. Ex. 1 | C. Ex. 2 | Ex. 1 |
|---|---|---|---|
| Impact Strength (J/m) | 123.4 | 148.4 | 156.9 |
| Tensile Strength (MPa) | 14.5 | 15.2 | 15.3 |
| Tensile Modulus (MPa) | 1,303 | 1,291 | 1,426 |
| Flexural Strength (MPa) | 19.3 | 19.7 | 20.2 |
| Flexural Modulus (MPa) | 997 | 955 | 1,045 |

The plastic composite material of Comparative Example 1 may be a plastic composite material manufactured without using biomass, using undried coffee grounds in the method for manufacturing a plastic composite material including coffee grounds as shown in FIG. 1. The plastic composite material of Comparative Example 2 may be a plastic composite material manufactured using biomass and using undried biomass and coffee grounds. The plastic composite material of Embodiment 1 may be a plastic composite material manufactured using biomass and using dried biomass and coffee grounds. It can be confirmed that the plastic composite material (Embodiment 1), which is manufactured using biomass and using dried biomass and coffee grounds, has improved impact strength, tensile strength, Young's modulus, flexural strength, or flexural modulus compared to Comparative Example 1 or Comparative Example 2.

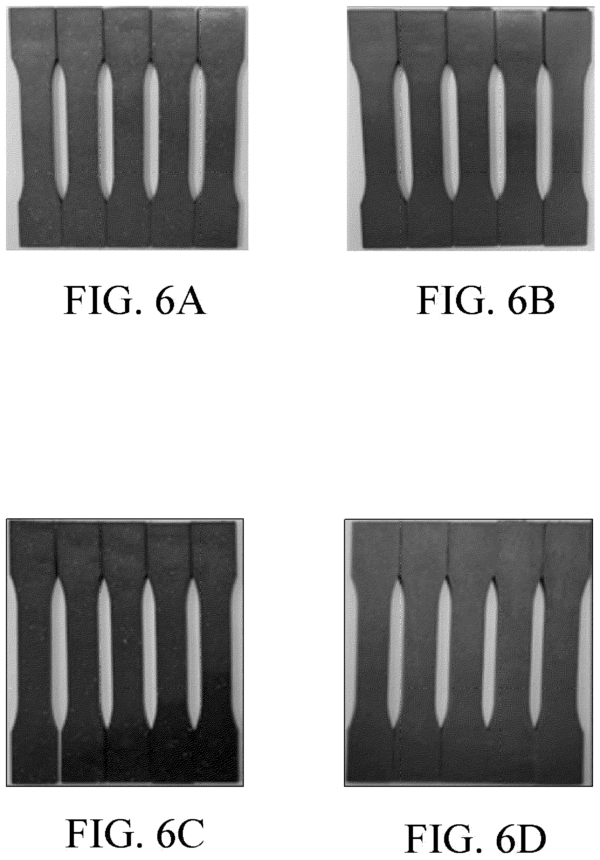

FIG. 6A is a view illustrating a plastic composite material according to a comparative example of the present disclosure. FIG. 6B is a view illustrating a plastic composite material according to an embodiment of the present disclosure. FIG. 6C is a view illustrating a plastic composite material according to a comparative example of the present disclosure. FIG. 6D is a view illustrating a plastic composite material according to an embodiment of the present disclosure.

The embodiments shown in FIGS. 6A to 6D may be combined with the embodiments shown in FIGS. 1 to 5.

The plastic composite material in FIG. 6A is a plastic composite material manufactured by performing only the primary extrusion process (P17) without performing the secondary extrusion process (P19) in the method for manufacturing a plastic composite material including coffee grounds as shown in FIG. 1, using a twin-screw extruder (with an extrusion screw diameter (Ø) of 32). This plastic composite material can be confirmed to have an impact strength of 152 (J/m). The plastic composite material in FIG. 6B is a plastic composite material manufactured by performing both the primary extrusion process (P17) and the secondary extrusion process (P19) in the method for manufacturing a plastic composite material including coffee grounds as shown in FIG. 1, using a twin-screw extruder (with an extrusion screw diameter (Ø) of 32), with the impact strength thereof found to be 180 (J/m).

The plastic composite material in FIG. 6C is a plastic composite material manufactured by performing the primary extrusion process (P17) without performing the secondary extrusion process (P19) in the method for manufacturing a plastic composite material including coffee grounds as shown in FIG. 1, using a twin-screw extruder (with an extrusion screw diameter (Ø) of 75), with the impact strength thereof found to be about 152 (J/m). The plastic composite material in FIG. 6D is a plastic composite material manufactured by performing both the primary extrusion process (P17) and the secondary extrusion process (P19) in the method for manufacturing a plastic composite material including coffee grounds as shown in FIG. 1, using a twin-screw extruder (with an extrusion screw diameter (Ø) of 75), with the impact strength thereof found to be 180 (J/m).

Compared to the cross-sections of the plastic composite material in FIG. 6A or 6C, the cross-sections of the plastic composite material in FIG. 6B or 6D can be confirmed to have relatively uniform surfaces (or appearances).

Compared to the plastic composite material in FIG. 6A or 6C, the plastic composite material in FIG. 6B or FIG. 6D can be confirmed to have relatively improved impact strength.

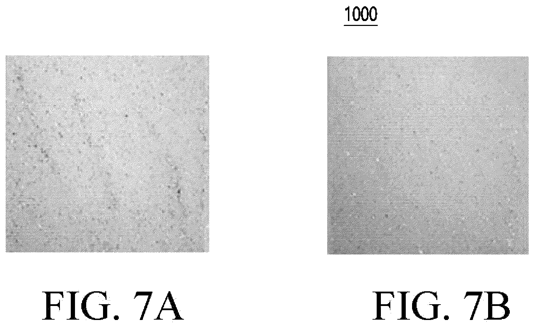

FIG. 7A is an image illustrating a plastic composite material according to a comparative example of the present disclosure. FIG. 7B is an image illustrating a plastic composite material according to an embodiment of the present disclosure.

The embodiments shown in FIGS. 7A and 7B may be combined with the embodiments shown in FIGS. 1 to 6D.

The plastic composite material in FIG. 7A may be a plastic composite material manufactured without performing the freeze-grinding process (P15) in the method for manufacturing a plastic composite material including coffee grounds as shown in FIG. 1. The plastic composite material (1000) in FIG. 7B may be a plastic composite material manufactured by performing the grinding process (P15) in the method for manufacturing a plastic composite material including coffee grounds as shown in FIG. 1.

Compared to the plastic composite material in FIG. 7A, the plastic composite material (1000) in FIG. 7B can be confirmed to have a surface (or appearance) with a relatively uniform particle size distribution.

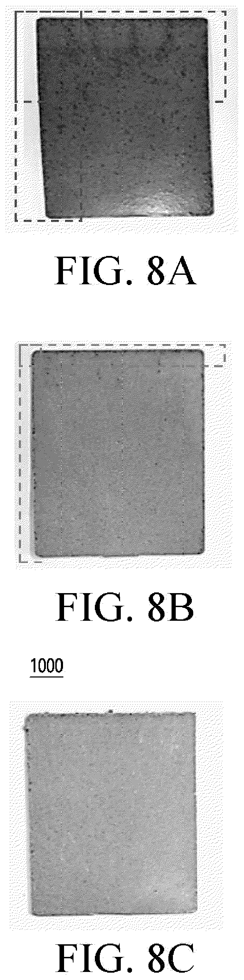

FIGS. 8A and 8B are images illustrating plastic composite materials according to comparative examples of the present disclosure. FIG. 8C is an image illustrating a plastic composite material according to an embodiment of the present disclosure.

The embodiments shown in FIGS. 8A to 8C may be combined with the embodiments shown in FIGS. 1 to 7b.

The plastic composite material in FIG. 8A may be a plastic composite material manufactured without performing the freeze-grinding process (P15) and the secondary extrusion process (P19) in the method for manufacturing a plastic composite material including coffee grounds as shown in FIG. 1. The plastic composite material in FIG. 8B may be a plastic composite material manufactured without performing the freeze-grinding process (P15) but performing the secondary extrusion process (P19) in the method for manufacturing a plastic composite material including coffee grounds as shown in FIG. 1. The plastic composite material (1000) in FIG. 8C may be a plastic composite material manufactured by performing both the freeze-grinding process (P15) and the secondary extrusion process (P19) in the method for manufacturing a plastic composite material including coffee grounds as shown in FIG. 1.

Compared to the plastic composite material in FIG. 8A, the plastic composite material (1000) in FIG. 8C can be confirmed to have a relatively uniform surface (or appearance) without occurrence of indentation at one end (or terminal) of the plastic composite material.

Compared to the plastic composite material in FIG. 8B, the plastic composite material (1000) in FIG. 8C can be confirmed to have a relatively uniform surface (or appearance).

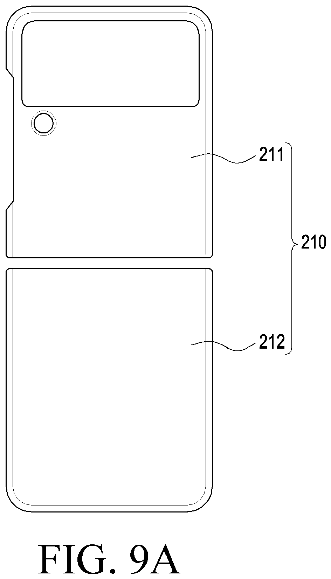

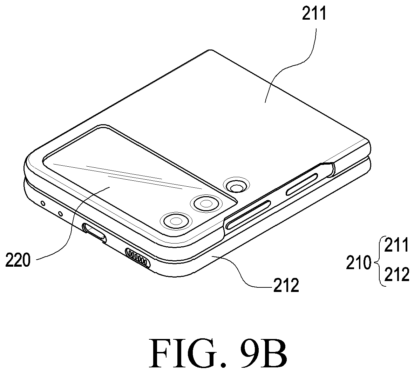

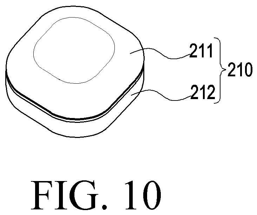

FIGS. 9A and 9B are diagrams illustrating a cover member composed of a plastic composite material according to an embodiment of the present disclosure. FIG. 10 is a diagram illustrating a cover member composed of a plastic composite material according to an embodiment of the present disclosure.

The embodiments shown in FIGS. 9A to 10 may be combined with the embodiments shown in FIGS. 1 to 8B.

Referring to FIGS. 9A to 10, the cover member (210) may include a first cover (211) and a second cover (212). In an embodiment, the first cover (211) and the second cover (212) may each be a cover member molded from the plastic composite material manufactured by the method for manufacturing a plastic composite material including coffee grounds as shown in FIG. 1.

Referring to FIGS. 9A and 9B, the cover member (210) may be used as a cover member for an electronic device (220) (e.g., a foldable smartphone) configured to fold or unfold at least in part.

Referring to FIG. 10, the cover member (210) may be used as a cover member for an earphone-type electronic device (e.g., wireless Bluetooth earphones).

The plastic composite material according to an embodiment of the present disclosure is not limited to being used as a cover member for electronic devices and may also be used for various members, including exterior parts for vehicles.

Technologies related to plastic composite materials utilizing coffee grounds, the residue left after extracting coffee from coffee beans, are being presented. Although related technologies propose plastic composite materials including coffee grounds, they merely include coffee grounds without presenting additional processes necessary when adding coffee grounds.

In the plastic composite materials including coffee grounds in related technologies, the particle size of the coffee grounds is non-uniform, resulting in an uneven surface on the plastic composite material, which reduces product quality. Additionally, the non-uniform particle size of the coffee grounds in these related technologies causes additives to be unevenly mixed during manufacturing, leading to lower physical property values in the plastic composite material.

According to an embodiment of the present disclosure, a plastic composite material including coffee grounds with a smooth surface (or appearance), a method for manufacturing the same, a product using it, and the characteristics of the product can be provided.

According to an embodiment of the present disclosure, a plastic composite material including coffee grounds with improved physical properties and a method for manufacturing same can be provided.

However, the problems to be solved by the present disclosure are not limited to those mentioned above and can be variously defined without departing from the spirit and scope of the present disclosure.

According to an embodiment of the present disclosure, the plastic composite material, by including coffee grounds with a uniform particle size distribution, may have an aesthetically pleasing product surface.

According to an embodiment of the present disclosure, the plastic composite material may have reduced discoloration due to ultraviolet light.

According to an embodiment of the present disclosure, the plastic composite material may retain its physical properties even when coffee grounds are included.

The effects obtainable from the present disclosure are not limited to those mentioned above, and other effects not mentioned will be clearly understood from the following description by those skilled in the art to which the present disclosure belongs.

According to an example of the present disclosure, the plastic composite material (e.g., the plastic composite material (1000) in FIG. 7B or FIG. 8C) may include coffee grounds. The coffee grounds may have a particle size distribution of 94% by weight or more for coffee grounds particles with a particle size greater than 250 µm and less than or equal to 850 µm. The colorimetric value of the plastic composite material may be 4.0 or less.

According to an embodiment, the coffee grounds may have a particle size distribution of 48.6% by weight or more for coffee grounds particles with a particle size greater than 250 µm and less than or equal to 425 µm (inclusive). The coffee grounds may have a particle size distribution of 46.2% by weight or more for coffee grounds particles with a particle size greater than 425 µm and less than or equal to 850 µm.

According to an embodiment, the weight ratio of coffee grounds particles with a particle size greater than 250 µm and less than or equal to 850 µm may be at least 52 times the weight ratio of coffee grounds particles with a particle size greater than 180 µm and less than or equal to 250 µm.

According to an example, weight ratio of coffee grounds particles with a particle size greater than 850 µm may be 3.4% by weight or less.

According to an example, the colorimetric value of the plastic composite material may be 4.4 or less for UV-A. In an example, the colorimetric value of the plastic composite material may be 3.0 or less for UV-B.

According to an example, the impact strength of the plastic composite material may be 123.4 (J/m) to 190.4 (J/m).

According to an example, the tensile strength of the plastic composite material may be 14.5 MPa to 16.1 MPa.

According to an example, the Young's modulus of the plastic composite material may be 1,291 MPa to 1,561 MPa.

According to an example, the flexural strength of the plastic composite material may be 19.3 MPa to 21.1 MPa.

According to an example, the flexural modulus of the plastic composite material may be 955 MPa to 1,135 MPa.

According to an embodiment of the present disclosure, the method for manufacturing a plastic composite material including coffee grounds may include the processes of: preparing coffee grounds and biomass (e.g., process P11 in FIG. 1); drying the coffee grounds and the biomass (e.g., process P13 in FIG. 1); freeze-grinding the dried coffee grounds (e.g., process P15 in FIG. 1) wherein the coffee grounds formed by grinding the dried coffee grounds have a particle size distribution in which coffee grounds particles with a particle size greater than 250 µm and less than or equal to 850 µm are present in an amount of 94% by weight or more; primarily extruding a first mixture obtained by mixing a polymer resin, the ground coffee grounds, the dried biomass, and a first additive (e.g., process P17 in FIG. 1); secondarily extruding a second mixture obtained by mixing the first extrudate extruded in the primary extrusion process and a second additive (e.g., process P19 in FIG. 1); and drying the second extrudate extruded in the secondary extrusion process (e.g., process P21 in FIG. 1).

According to an embodiment, the drying process may include drying the coffee grounds and biomass separately.

According to an embodiment, the drying process may include an infrared irradiation process and a ultraviolet irradiation process.

According to an embodiment, the ultraviolet irradiation process may include irradiating at least one of UV-A, UV-B, or UV-C onto the coffee grounds or biomass.

According to an embodiment, the infrared irradiation process may be performed until the moisture content of the coffee grounds or biomass is reduced to 4% or less.

According to an example, the biomass may include at least one selected from the group consisting of wood meal, rice straw, rice husk, rice bran, soybean hull, or wheat bran.

According to an example, the polymer resin may include at least one selected from the group consisting of polypropylene-based polymer resins, polyethylene-based polymer resins, polystyrene-based polymer resins, acrylonitrile-butadiene-styrene copolymer-based resins, polyoxymethylene-based polymer resins, polyketone-based polymer resins, thermoplastic elastomer-based resins, or biodegradable polymer resins.

According to an example, the first additive may include at least one of an antioxidant, a compatibilizer, or an impact modifier.

According to an embodiment, the second additive may include at least one of a UV stabilizer or a pigment.

According to an example, the weight ratio of the ground coffee grounds added in the primary extrusion process may be 3 to 30 parts by weight, based on 100 parts by weight of the polymer resin. The weight ratio of the dried biomass added in the primary extrusion process may be 3 to 10 parts by weight, based on 100 parts by weight of the polymer resin. The weight ratio of the first additive added in the primary extrusion process may be 3.4 to 37 parts by weight, based on 100 parts by weight of the polymer resin. The weight ratio of the second additive added in the secondary extrusion process may be 0.2 to 20 parts by weight, based on 100 parts by weight of the polymer resin added in the primary extrusion process.

Although specific embodiments have been described in detail in this document, various modifications are possible within the scope of the present disclosure and will be apparent to those skilled in the art.

## Claims

1. A plastic composite material, comprising coffee grounds (for example, plastic composite material (1000) in FIG. 7B or FIG. 8C),
wherein the coffee grounds have a particle size distribution of 94% by weight or more for coffee grounds particles with a particle size greater than 250 µm and less than or equal to 850 µm, and
wherein the plastic composite material has a colorimetric value of 4.4 or less.

2. The plastic composite material of claim 1, wherein the coffee grounds have a particle size distribution of 48.6% by weight or more for coffee grounds particles with a particle size greater than 250 µm and less than or equal to 425 µm, and 46.2% by weight or more for coffee grounds particles with a particle size greater than 425 µm and less than or equal to 850 µm.

3. The plastic composite material of any one of claims 1 and 2, wherein the coffee grounds particles with a particle size greater than 250 µm and less than or equal to 850 µm has a weight ratio 52 times greater than the weight ratio of the coffee grounds particles with a particle size greater than 180 µm and less than or equal to 250 µm.

4. The plastic composite material of any one of claims 1 to 3, wherein the coffee grounds particles with a particle size of greater than 850 µm is a weight ratio of 3.4% by weight or less.

5. The plastic composite material of any one of claims 1 to 4, wherein the plastic composite material has a colorimetric value of 4.4 or less for UV-A and 3.0 or less for UV-B.

6. The plastic composite material of any one of claims 1 to 5, wherein the plastic composite material has an impact strength of 123.4 (J/m) to 190.4 (J/m).

7. The plastic composite material of any one of claims 1 to 6, wherein the plastic composite material has a tensile strength of 14.5 MPa to 16.1 MPa.

8. The plastic composite material of any one of claims 1 to 7, wherein the plastic composite material has a Young's modulus of 1,291 MPa to 1,561 MPa.

9. The plastic composite material of any one of claims 1 to 8, wherein the plastic composite material has a flexural strength of 19.3 MPa to 21.1 MPa.

10. The plastic composite material of any one of claims 1 to 9, wherein the plastic composite material has a flexural modulus of 955 MPa to 1,135 MPa.

11. A method for manufacturing a plastic composite material comprising coffee grounds, the method comprising:
preparing coffee grounds and biomass (for example, process P11 in FIG. 1);
drying the coffee grounds and the biomass (for example, process P13 in FIG. 1);
freeze-grinding the dried coffee grounds (for example, process P15 in FIG. 1), wherein the coffee grounds formed by grinding the dried coffee grounds have a particle size distribution of 94% by weight or more for coffee grounds particles with a particle size greater than and 250 µm less than or equal to 850 µm;
primarily extruding a first mixture obtained by mixing a polymer resin, the ground coffee grounds, the dried biomass, and a first additive (for example, step P17 in FIG. 1);
secondarily extruding a second mixture obtained by mixing the first extrudate extruded in the primary extrusion process and a second additive (for example, step P19 in FIG. 1); and
drying the second extrudate extruded in the secondary extrusion process (for example, step P21 in FIG. 1).

12. The method of claim 11, wherein the drying process is a process of separately drying the coffee grounds and the biomass.

13. The method of any one of claims 11 and 12, wherein the drying process comprises an infrared irradiation process and an ultraviolet irradiation process.

14. The method of claim 13, wherein the ultraviolet irradiation process is a process of irradiating at least one of UV-A, UV-B, or UV-C onto the coffee grounds or the biomass.

15. The method of any one of claims 13 and 14, wherein the infrared irradiation process is performed until the coffee grounds or the biomass has moisture content of 4% or less.
